# FASCICULE DE BREVET EUROPEEN

(11) **EP 0 690 606 B1**
(45) Date de publication et mention de la délivrance du brevet: **21.08.2002**
(21) Numéro de dépôt: 95401539.2
(22) Date de dépôt: 28.06.1995
(51) Int. Cl.: H04M 11/04

(54) **Transmetteur téléphonique programmable acoustiquement**
Akustisch programmierbarer Telefonsender
Acoustically programmable telephone transmitter

(30) Priorité: 29.06.1994 FR 9408019
(43) Date de publication de la demande: 03.01.1996
(73) Titulaire: ATRAL, F-38190 Crolles (FR)
(72) Inventeur: Lefebvre, Thierry, F-38240 Meylan (FR)
(74) Mandataire: Casalonga, Axel

(56) Documents cités:
- EP-A- 0 178 229
- EP-A- 0 210 889
- WO-A-93/10621
- FR-A- 2 678 123
- GB-A- 2 266 431

## Description

La présente invention concerne un transmetteur téléphonique programmable, utilisé en particulier dans les systèmes d'alarme afin de transmettre automatiquement des informations sur une ligne téléphonique en particulier après réception d'un ordre faisant suite à une intrusion dans un local protégé et/ou dans les systèmes de surveillance et/ou de commande d'appareils par voie téléphonique, notamment dans le domaine de la domotique.

Le document EP-A-0 178 229 décrit un transmetteur téléphonique pour un système de surveillance et d'alarme, dans lequel un clavier est utilisé pour effectuer des opérations de programmation et de commande et dans lequel, indépendamment dudit clavier, un microphone est prévu pour enregistrer des messages vocaux propres à un utilisateur. Ce microphone peut aussi être utilisé pour effectuer une écoute des bruits ambiants via une ligne téléphonique, mais uniquement en l'absence de messages pré-enregistrés à transmettre sur cette ligne téléphonique.

Le document EP-A-0 210 889 décrit un transmetteur téléphonique dans lequel un boîtier indépendant et portable peut être utilisé pour effectuer des télécommandes et des téléprogrammations rapprochées d'un ensemble principal d'une centrale de surveillance et d'alarme. Ce document propose, en complément, d'utiliser un microphone relié à distance à l'ensemble principal pour effectuer une écoute des bruits ambiants dans un endroit éloigné de l'ensemble principal.

La présente invention a pour objectif de proposer un transmetteur téléphonique programmable de structure simple et de fonctionnement perfectionné.

Le transmetteur téléphonique selon l'invention comprend un ensemble de moyens de mémorisation et de traitement de données correspondant en particulier à des informations à transmettre et/ou des informations de commande et/ou des informations de programme, et des moyens de codage-décodage d'une part reliés audit ensemble et d'autre part susceptibles d'être reliés soit à des moyens de réception de signaux sonores en vue de transformer des signaux reçus en des signaux adaptés pour être enregistrés dans ledit ensemble soit à une ligne téléphonique en vue de transformer des signaux enregistrés dans ledit ensemble en signaux à transmettre sur cette ligne téléphonique, lesdits moyens de réception de signaux sonores étant susceptibles d'être reliés soit auxdits moyens de codage-décodage en vue de l'enregistrement de signaux sonores dans ledit ensemble soit à ladite ligne téléphonique en vue de transmettre des signaux sonores sur cette ligne téléphonique.

Le transmetteur téléphonique selon l'invention comprend en outre des moyens de commutation adaptés pour engendrer deux états ou situations de fonctionnement tels que, dans un premier état, lesdits moyens de réception de signaux sonores sont reliés auxdits moyens de codage-décodage et, dans un second état, lesdits moyens de réception de signaux sonores et lesdits moyens de codage-décodage sont reliés à la ligne téléphonique, ainsi que des moyens d'entrée d'ordre de commutation pour placer lesdits moyens de commutation soit dans leur premier état précité en vue de programmer ledit ensemble à l'aide d'un outil de programmation émettant des signaux sonores dans le voisinage desdits moyens de réception de signaux sonores, soit dans leur second état précité en vue de transmettre sur ladite ligne téléphonique des signaux issus desdits moyens de codage-décodage et pré-renregistrés dans ledit ensemble et les signaux sonores captés par lesdits moyens de réception de signaux sonores dans leur environnement.

Selon l'invention, lesdits moyens de réception de signaux sonores comprennent de préférence un microphone suivi d'un amplificateur à gain variable.

Selon l'invention, lesdits moyens de commutation comprennent de préférence au moins un commutateur permettant de relier lesdits moyens de réception de signaux sonores soit auxdits moyens de décodage soit à la ligne téléphonique.

Selon l'invention, lesdits moyens de commutation peuvent avantageusement comprendre deux commutateurs actionnables par des moyens dudit ensemble de moyens sur ordre desdits moyens d'entrée d'ordre de commutation, ces commutateurs étant, dans une position, reliés entre eux et reliant lesdits moyens de réception de signaux sonores auxdits moyens de décodage et reliant, dans leur autre position, l'un lesdits moyens de décodage à la ligne téléphonique et l'autre desdits moyens de réception de signaux sonores à la ligne téléphonique.

Selon une variante de l'invention, lesdits moyens d'entrée d'ordre de commutation peuvent comprendre un bouton actionnable manuellemnt.

Selon une autre variante de l'invention, lesdits moyens d'entrée d'ordre de commutation peuvent comprendre des moyens de réception d'un signal d'ordre de commutation par voie radioélectrique ou sonore.

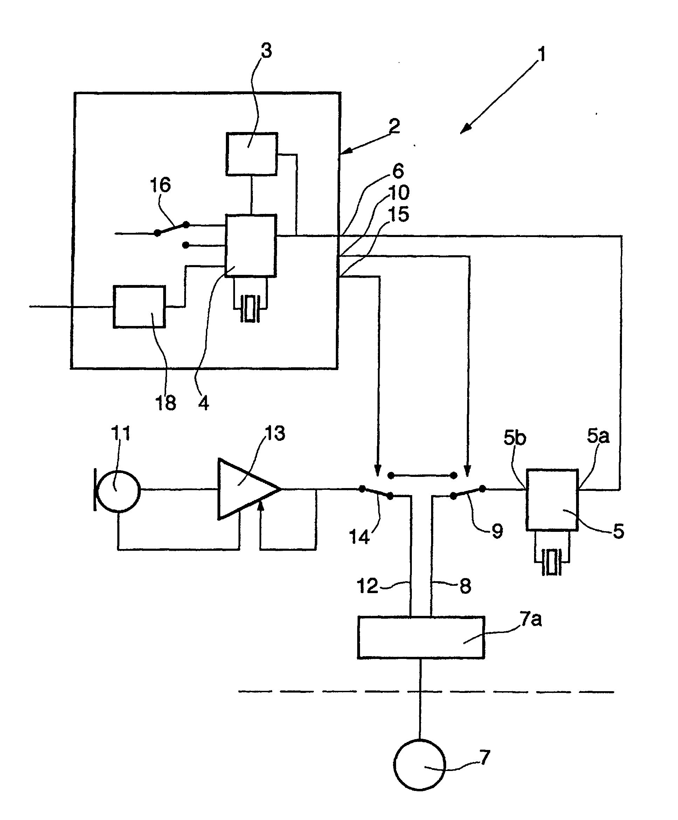

La présente invention sera mieux comprise à l'étude d'un transmetteur téléphonique décrit à titre d'exemple non limitatif et illustré schématiquement par la figure unique annexée.

Le transmetteur téléphonique représenté sur la figure, dont seuls les éléments essentiels sont représentés schématiquement et dont le boîtier qui les porte n'est pas représenté, qui est repéré d'une manière générale par la référence 1, comprend un ensemble de circuits électroniques qui comprend dans l'exemple un ensemble de circuits de mémorisation de données 3 et un processeur de gestion et de traitement de données 4, ces données correspondant en particulier à des informations à transmettre et/ou des informations de commande et/ou des informations de programme.

Le transmetteur téléphonique 1 comprend un circuit électronique codeur-décodeur 5 d'une part relié, par son entrée/sortie Sa à l'entrée/sortie 6 de données de l'ensemble 2 et d'autre part relié, par son entrée/sortie 5b au réseau téléphonique commuté 7 par une ligne 8 au travers d'une interface adaptée 7a de ligne téléphonique.

Ce codeur-décodeur 5 est adapté notamment pour transformer des signaux fréquentiels reçus à son entrée/sortie 5b en signaux adaptés pour être compris par les circuits dudit ensemble 2, en particulier en signaux binaires, qu'il délivre à son entrée/sortie 5a, et réciproquement.

Sur la ligne 8 est prévu un commutateur électronique 9 à deux positions, susceptible d'être commandé par un ordre provenant d'une sortie 10 de l'ensemble 2.

Le transmetteur téléphonique 1 comprend également un microphone 11 suivi d'un amplificateur à gain variable 13 relié au réseau téléphonique commuté 7 par une ligne 12 au travers de l'interface 7a.

Sur cette ligne 12, entre l'amplificateur 13 et l'interface 7a, est prévu un commutateur électronique 14 à deux positions, susceptible d'être commandé par un ordre provenant d'une sortie 15 de l'ensemble 2.

Lorsque le commutateur 9 est à une première position, le codeur-décodeur 5 est connecté au réseau téléphonique 7. Lorsque le commutateur 14 est à une première position, le microphone 11 est connecté au réseau téléphonique 7. Lorsque les commutateurs 9 et 14 sont à leur autre position, les bornes correspondantes de ces commutateurs 9 et 14 étant reliées entre elles, le microphone 11 est connecté au codeur-décodeur 5.

Le transmetteur téléphonique 1 comprend en outre une entrée d'ordre de commutation, constituée dans l'exemple par un commutateur manuel 16 à deux positions, disposé par exemple à l'intérieur du boîtier du transmetteur. Ce commutateur 16 est relié au processeur 4 de l'ensemble 2 pour commander les commutateurs 9 et 14. A une première position du commutateur 16 correspond la première position des commutateurs 9 et 14 et à une seconde position du commutateur 16 correspond la seconde position des commutateurs 9 et 14.

Dans un exemple, les données mémorisées dans le circuit de mémorisation 3 peuvent correspondre à un ou plusieurs numéros de téléphone à appeler et à des messages à transmettre. Le processeur 4 gère la mémorisation de ces données dans les mémoires du circuit de mémorisation 3 après leur introduction comme on le décrira plus loin et gère la fourniture de ces données à l'entrée/sortie 6 de l'ensemble 2 par exemple à la réception d'un ordre sur son récepteur de signaux radioélectriques 18 provenant de capteurs faisant suite à une intrusion ou à un incident ou à un accident.

Le transmetteur téléphonique 1 peut être utilisé et fonctionne de la manière suivante.

Lorsque les commutateurs 9, 14 et 16 sont à leur première position, le transmetteur téléphonique 1 est en situation d'utilisation.

Reprenant l'exemple ci-dessus, le transmetteur téléphonique 1 reçoit un ordre provenant d'un capteur. Le processeur 4 gère la composition et la transmission à son entrée/sortie 6 des données correspondant à un numéro de téléphone à appeler, qui sont transformés en signaux fréquentiels par le codeur-décodeur 5 pour être émis sur le réseau 7 puis effectue les opérations de transmission du message à transmettre vers le correspondant appelé. Bien entendu, comme connu, le processeur 4 gère les opérations de prise et de restitution de ligne téléphonique et la sélection de correspondants dont les données relatives à leurs numéros de téléphone peuvent être contenues dans les mémoires 3.

Le microphone 11 peut être utilisé pour effectuer une écoute des bruits du lieu dans lequel le transmetteur téléphonique 1 est disposé, en transmettant les signaux sonores sur la ligne téléphonique du correspondant appelé.

De plus, la liaison via le réseau téléphonique 7 entre le transmetteur téléphonique 1 et le combiné téléphonique d'un correspondant ayant préalablement appelé le transmetteur téléphonique 1 peut être utilisée pour programmer ou reprogrammer l'ensemble 2 à l'aide d'un outil adapté pour émettre des signaux sonores au voisinage du microphone du combiné téléphonique précité, représentatifs de données gérables et mémorisables dans l'ensemble 2 après transformation par le codeur-décodeur 5.

Lorsque les commutateurs 9, 14 et 16 sont à leur seconde position, le transmetteur téléphonique 1 est dans une autre situation de programmation.

En effet, la liaison ainsi établie entre l'ensemble 2 et le microphone 11 peut être utilisée pour programmer ou reprogrammer cet ensemble 2 à l'aide de l'outil précité ou d'un autre outil identique ou équivalent adapté pour émettre des signaux sonores au voisinage du microphone 11, représentatifs de données gérables et mémorisables dans l'ensemble 2 après transformation par le codeur-décodeur 5.

Ainsi, c'est la position du commutateur 16, choisie par l'utilisateur, qui détermine le mode de fonctionnement du transmetteur téléphonique 1. Bien entendu, les actions de programmation ou de reprogrammation de l'ensemble 2 peuvent être soumises à l'introduction préalable d'un code d'identification par exemple en utilisant l'outil précité.

Ainsi, le transmetteur téléphonique 1 peut avantageusement ne plus comprendre de clavier de commande et de programmation porté habituellement par son boîtier, réduisant ainsi les risques de détérioration et de programmation intempestives.

Bien entendu, le commutateur 16 fournissant au processeur 4 un ordre volontaire de commutation des commutateurs 9 et 14 peut être remplacé par tout autre organe tel que le récepteur de signaux radioélectriques 18 recevant cet ordre par télécommande ou un récepteur de signaux infrarouges. Bien entendu également, le transmetteur téléphonique 1 peut être programmé et utilisé pour la mémorisation et la transmission de toutes données relatives en particulier à la surveillance et la programmation d'appareils, notamment dans des applications domotiques.

La présente invention ne se limite pas à l'exemple ci-dessus décrit. Bien des variantes de réalisation et d'utilisation sont possibles sans sortir du cadre défini par les revendications annexées.

## Revendications

1. Transmetteur téléphonique, en particulier pour système d'alarme, comprenant :
- un ensemble (2) de moyens de mémorisation et de traitement de données correspondant en particulier à des informations à transmettre et/ou des informations de commande et/ou des informations de programme,
- des moyens de codage-décodage (5) d'une part reliés audit ensemble et d'autre part susceptibles d'être reliés soit à des moyens de réception de signaux sonores (11) en vue de transformer des signaux reçus en des signaux adaptés pour être enregistrés dans ledit ensemble soit à une ligne téléphonique en vue de transformer des signaux enregistrés dans ledit ensemble en signaux à transmettre sur cette ligne téléphonique,
- lesdits moyens de réception de signaux sonores étant susceptibles d'être reliés soit auxdits moyens de codage-décodage en vue de l'enregistrement de signaux sonores dans ledit ensemble soit à ladite ligne téléphonique en vue de transmettre des signaux sonores sur cette ligne téléphonique,
**caractérisé par le fait qu'**il comprend en outre
- des moyens de commutation (9, 14) adaptés pour engendrer deux états ou situations de fonctionnement tels que, dans un premier état, lesdits moyens de réception de signaux sonores (11) sont reliés auxdits moyens de codage-décodage (5) et, dans un second état, lesdits moyens de réception de signaux sonores (11) et lesdits moyens de codage-décodage (5) sont reliés à la ligne téléphonique,
- ainsi que des moyens d'entrée d'ordre de commutation (18) pour placer lesdits moyens de commutation (9, 14) soit dans leur premier état précité en vue de programmer ledit ensemble (2) à l'aide d'un outil de programmation émettant des signaux sonores dans le voisinage desdits moyens de réception de signaux sonores (11), soit dans leur second état précité en vue de transmettre sur ladite ligne téléphonique des signaux issus desdits moyens de codage-décodage (5) et pré-enregistrés dans ledit ensemble (2) et les signaux sonores captés par lesdits moyens de réception de signaux sonores (11) dans leur environnement.

2. Transmetteur téléphonique selon la revendication 1, **caractérisé par le fait que** lesdits moyens de réception de signaux sonores comprennent un microphone (11) suivi d'un amplificateur à gain variable (13).

3. Transmetteur téléphonique selon la revendication 1, **caractérisé par le fait que** lesdits moyens de commutation comprennent au moins un commutateur (14) permettant de relier lesdits moyens de réception de signaux sonores soit auxdits moyens de codage-décodage (5) soit à la ligne téléphonique.

4. Transmetteur téléphonique selon la revendication 1, **caractérisé par le fait que** lesdits moyens de commutation comprennent deux commutateurs (9, 14) actionnables par des moyens (4) dudit ensemble de moyens sur ordre desdits moyens d'entrée d'ordre de commutation, ces commutateurs étant, dans une position reliés entre eux et reliant lesdits moyens de réception de signaux sonores auxdits moyens de codage-décodage (5) et reliant, dans leur autre position, l'un lesdits moyens de codage-décodage à la ligne téléphonique et l'autre lesdits moyens de réception de signaux sonores à la ligne téléphonique.

5. Transmetteur téléphonique selon la revendication 1, **caractérisé par le fait que** lesdits moyens d'entrée d'ordre de commutation comprennent un bouton actionnable manuellemnt (16).

6. Transmetteur téléphonique selon la revendication 1, **caractérisé par le fait que** lesdits moyens d'entrée d'ordre de commutation comprennent des moyens (18) de réception d'un signal d'ordre de commutation par voie radioélectrique ou sonore.

## Patentansprüche

1. Telefontransmitter insbesondere für Alarmeinrichtungen, der aufweist:
- eine Anordnung (2) von Mitteln zum Speichern und Verarbeiten von Daten, die insbesondere zu übermittelnden Informationen und/oder Steuerinformationen und/oder Programminformationen entsprechen,
- Kodier-Dekodiermittel (5), die einerseits an die vorgenannte Anordnung angeschlossen sind und andererseits angeschlossen werden können, entweder an Schallsignal-Empfangsmittel (11), um empfangene Signale in in der Anordnung speicherbare Signale umzusetzen oder an eine Telefonleitung, um in der Anordnung gespeicherte Signale in über die Telefonleitung zu übertragende Signale umzusetzen,
- wobei die Schallsignalempfangsmittel verbunden werden können entweder mit den Kodier-Dekodiermitteln, um Schallsignale in der Anordnung zu speichern oder mit der Telefonleitung, um Schallsignale über diese Telefonleitung zu übertragen,
**dadurch gekennzeichnet, dass** er außerdem aufweist,
- Schaltermittel (9,14), die zwei Zustände oder Funktionsweisen einnehmen können, wobei in einem ersten Zustand die Schallsignalempfangsmittel (11) an die Kodier-Dekodiermittel (5) angeschlossen sind und in einem zweiten Zustand die Schallsignalempfangsmittel (11) und die Kodier-Dekodiermittel (5) mit der Telefonleitung verbunden sind,
- außerdem Schaltbefehleingabemittel (18), um die Schaltermittel (9,14) entweder in ihren vorgenannten ersten Zustand zum Programmieren der Anordnung (2) mit Hilfe eines Programmierwerkzeuges das Schallsignale in der Umgebung der Schallsignalempfangsmittel (11) aussendet oder in ihren vorgenannten zweiten Zustand zu überführen, um über die Telefonleitung von den Kodier-Dekodiermitteln (5) abgegebene und in der Anordnung (2) vorgespeicherte Signale und von den Schallsignalempfangsmitteln (11) in deren Umgebung aufgenommene Schallsignale zu übermitteln zu können.

2. Telefontransmitter nach Anspruch 1, **dadurch gekennzeichnet, dass** die Schallsignalempfangsmittel ein Mikrofon (11) aufweisen, dem ein Verstärker (13) mit regelbarer Verstärkung nachgeschaltet ist.

3. Telefontransmitter nach Anspruch 1, **dadurch gekennzeichnet, dass** die Schaltermittel wenigstens einen Schalter (14) aufweisen, der es erlaubt die Schallsignalempfangsmittel entweder mit den Kodier-Dekodiermitteln (5) oder mit der Telefonleitung zu verbinden.

4. Telefontransmitter nach Anspruch 1, **dadurch gekennzeichnet, dass** die Schaltermittel zwei Schalter (9,14) aufweisen, die durch Mittel (4) der Mittelanordnung (2) auf Befehl der Schaltbefehleingabemittel betätigbar sind, wobei die Schalter in einer Stellung miteinander verbunden sind und die Schallsignalempfangsmittel mit den Kodier-Dekodiermitteln (5) verbinden und in ihrer anderen Stellung der eine (Schalter) die Kodier-Dekodiermittel mit der Telefonleitung und der andere (Schalter) die Schallsignalempfangsmittel mit der Telefonleitung verbindet.

5. Telefontransmitter nach Anspruch 1, **dadurch gekennzeichnet, dass** die Schaltbefehleingabemittel einen handbetätigten Knopf (16) aufweisen.

6. Telefontransmitter nach Anspruch 1, **dadurch gekennzeichnet, dass** die Schaltbefehleingabemittel Mittel (18) zum Empfang eines Schaltbefehls auf radioelektrischem oder akustischem Weg aufweisen.

## Claims

1. A telephone transmitter, in particular for an alarm system, comprising:
- a set (2) of means for storing and processing data corresponding in particular to information to be transmitted and/or control information and/or program information, and
- coding-decoding means (5) connected to said set and adapted to be connected either to means (11) for receiving audio signals to convert received signals into signals adapted to be stored in said set or to a telephone line to convert signals stored in said set into signals to be transmitted on said telephone line,
- said means for receiving audio signals being adapted to be connected either to said coding-decoding means to store audio signals in said set or to said telephone line to transmit audio signals on said telephone line,
**characterized in that** it further comprises:
- switching means (9, 14) adapted to generate two states or situations of operation such that, in a first state, said audio signal receiving means (11) are connected to said coding-decoding means (5) and, in a second state, said audio signal receiving means (11) and said coding-decoding means (5) are connected to the telephone line, and
- switching instruction entry means (18) for placing said switching means (9, 14) either in their first aforementioned state for programming said set (2) using a programming tool emitting audio signals in the vicinity of said audio signal receiving means (11) or their second aforementioned state to transmit on said telephone line signals from said coding-decoding means (5) and prestored in said set (2) and audio signals picked up by said audio signal receiving means (11) in their environment.

2. A telephone transmitter according to claim 1, **characterized in that** said audio signal receiving means comprise a microphone (11) followed by a variable gain amplifier (13).

3. A telephone transmitter according to claim 1, **characterized in that** said switching means comprise a switch (14) for connecting said audio signal receiving means either to said coding-decoding means (5) or to the telephone line.

4. A telephone transmitter according to claim 1, **characterized in that** said switching means comprise two switches (9, 14) adapted to be operated by means (4) from said set of means on the instructions of said switching instruction entry means, said switches connecting said audio signal receiving means to said coding-decoding means (5) in an interconnected position and connecting one of said coding-decoding means to the telephone line and the other of said audio signal receiving means to the telephone line in their other position.

5. A telephone transmitter according to claim 1, **characterized in that** said switching instruction entry means comprise a manual operable button (16).

6. A telephone transmitter according to claim 1, **characterized in that** said switching instruction entry means comprise means (18) for receiving a radio or audio switching instruction signal.
